# EUROPÄISCHE PATENTANMELDUNG

(11) **EP 2 336 620 A2**
(43) Veröffentlichungstag der Anmeldung: **22.06.2011**
(21) Anmeldenummer: 10006845.1
(22) Anmeldetag: 02.07.2010
(51) Int. Cl.: F16K 31/08

(54) **Elektroventil**

(30) Priorität: 03.07.2009 PL 38845509
(71) Anmelder: P.U.H."XEN" Piotr Zmuda, 33-150 Wola (PL)
(72) Erfinder: Die Erfindernennung liegt noch nicht vor

(57) **Zusammenfassung**

Das Elektroventil besitzt einen Kern /4/, den ein Dauermagnet in seiner ganzen Länge oder in ihrem mindestens der Längenhälfte der Spule /3/ gleichem Teil bildet; und die Länge des Kerns 4 ist so, dass er in der Offenstellung den ganzen Durchmesser der Leitung /2/ öffnet, in der Verschlussstellung dagegen ist der Abstand seines Endes von der Wickelungsgrenze der Spule /3/ kleiner als die Hälfte ihrer Länge, wobei auf dem Körper /1/ das Elektroventil Endschalter /8/ hat.

## Beschreibung

Der Erfindungsgenstand ist ein Elektroventil, besonders in der Zentralheizungsanlage.

Aus der polnischen Patentbeschreibung Nr. 191950 ist das Elektromagnetventil für hydraulische Medien bekannt, das einen Ventilkörper mit Durchbohrung, einen Ventilschieber in Form eines in der Durchbohrung verschiebbar angebrachten ausgehöhlten Zylinders und zwei Elektromagnete enthält. In diesem Ventil wird der Schieber bei jeder Erregung irgendeines der Elektromagnete an den Anker dieses Elektromagnetes angezogen. Auf diese Weise wird die Umschaltung des Ventils in die Schaltung der Durchflussöffnung oder -schließung durch Erregung des einen oder des anderen Elektromagnetes wechselweise realisiert.

Das auch aus der Anmeldungsbeschreibung Nr. P.313153 bekannte Elektromagnetventil, das aus einem Ventilkörper mit longitudinaler Durchflussleitung und einer Magnetspule besteht, in dem den Kurzschließer ein Elektromagnetkern in Form einer in seiner Achse ausgehöhlten Walze bildet, welcher sich in einer Hin- und Herbewegung bewegt, die durch die Einschaltung der Magnetspule und eine, in der Aushöhlung des Kerns eingelagerte Verschlussfeder erzwungen wird.

Die Angabe der Spannung zur Magnetspule zieht den Kern tiefer in das Innere der Spule ein und das Ventil wird geöffnet, die Abschaltung der Spannung löst den Kern frei und die Feder verschiebt ihn in die Verschlusstellung. Es geschieht deshalb so, dass der Stromfluss durch die Spule den ferromagnetischen Kern magnetisiert, und wenn der Strom hört auf zu fließen, verliert der Kern seine Magnetisierung. Dabei bleibt der Kern, ungeachtet seiner extremen Lagen: Öffnung oder Verschluss, immer mit dem größeren Teil seiner Länge im Inneren der Spule, d.h. in den durch ihre Wickelung eingenommenen Grenzen.

Gemäß der Erfindung charakterisiert sich das Elektroventil, bestehend aus einem Körper mit longitudinaler Durchflussleitung und einer Magnetspule mit dem in seiner Achse ausgehöhlten Walzenkern, der einen sich in einer Hin- und Herbewegung bewegenden Ventilschließer bildet, dadurch, dass den Kern ein Dauermagnet in seiner ganzen Länge oder ihrem mindestens der Spulenlänge gleichem Teil bildet, und die Länge des Kerns ist so, dass er in der Offenstellung des Ventils den ganzen Durchmesser der Durchflussleitung öffnet, in der Verschlussstellung dagegen ist der Abstand seines Endes von der Spulenwickelungsgrenze kleiner als die Hälfte der Spulenlänge.

Unter der Spulenlänge wird die auf dem Spulenkörper durch ihre Wickelung eingenommene Länge verstanden.

Bei beiden Grenzpunkten der Kurzschließerbewegung hat das Elektroventil elektronische Endschalter.

Die Richtung der Hin- und Herbewegung des Spulenkerns - also des Kurzschließers des Elektroventils - ist senkrecht zur Achse der longitudinalen Durchflussleitung.

Der Kurzschließer schließt den Durchfluss, indem er günstig unter rechtem Winkel in die Bohrung der Durchflussleitung hineingeht. Der äußere Durchmesser des Kurzschließers ist gleich oder etwas größer als der Durchmesser der Durchflussleitung. Der Kurzschließer kann auf seinen Stirnflächen Dämpfungseinlagen haben.

Das Elektroventil kann manuell mittels eines Umschalters betätigt werden, der den Impuls der Gleichstromversorgung einschaltet und die Polarität der Versorgung ändert. Er kann auch mit einer elektronischen Steuereirichtung ausgerüstet werden. Das Elektroventil bedarf laut der Erfindung für seine richtige Arbeit weder zwei Elektromagnete noch die den Kurzschließer in bestimmter Stellung haltende Feder. Es bedarf auch keiner ständigen Stromerhaltung. Es ist einfacher in der Konstruktion und sparsamer im Betrieb, und dabei zuverlässig.

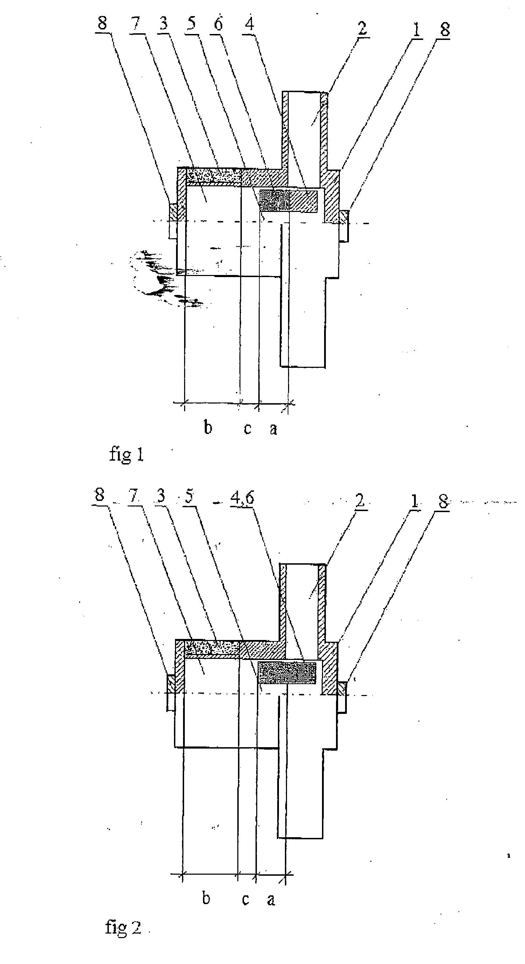

Die Erfindung wurde im Ausführungsbeispiel auf der Zeichnung näher erklärt, wo die Fig. 1 das Elektroventil im Halbschnitt mit dem Kern mit dem Dauermagnet im Teil seiner Länge, und die Fig. 2 das Elektroventil mit dem Kern mit dem Dauermagnet in der ganzen Länge darstellt.

Das Elektroventil besteht aus dem Körper 1 mit longitudinaler Durchflussleitung 2 und einer Magnetspule 3, die einen Walzenkern 4 mit der Aushöhlung 5 in seiner Achse besitzt. Der Kern 4 enthält einen Dauermagnet 6, der in diesem in der Fig. 1 dargestellten Beispiel die Hälfte seiner Länge bildet.

Der Kern 4 enthält einen Dauermagnet 6, dessen Länge a größer als die Hälfte der Spulenlänge b ist, wobei unter der Spulenlänge die auf dem Spulenkörper durch ihre Wickelung eingenommene Länge verstanden wird.

In diesem Beispiel beträgt die Länge a des Dauermagnets 6 10 mm, die Spulenlänge b beträgt dagegen 18 mm. In der Offenstellung des Elektroventils ist der ganze Durchmesser der Durchflussleitung 2 geöffnet, in der Verschlussstellung dagegen behält das Ende des Kerns 4 von der Grenze der Spule 3, also von der Grenze ihrer Wickelung, den Abstand c um eine Hälfte kleiner als die Hälfte der Spule 3 bei. In diesem Beispiel - bei der Länge des Kanals 7 der Bewegung des Kerns 4, also bei der Hublänge des Kerns von 44 mm - beträgt der Abstand c 6 mm. Auf dem Körper 1, bei beiden Enden des Kanals 7, hat das Elektroventil elektronische Endschalter 8.

Im Beispiel des auf der Fig. 2 dargestellten Elektroventils bildet den Kern in seiner ganzen Länge ein Dauermagnet.

Das Elektroventil wird mit Feststrom versorgt. Die zur Spule angegebene Spannung betätigt die Bewegung des Kerns. Er erreicht eine seiner Endstellungen, d.h. die Offen- oder Verschlussstellung, dann schließt der Endschalter die Versorgung ab, und der Kern bleibt in der eingenommenen Stellung. Der Kern kann wieder durch die Angabe des Stromimpulses mit geänderter Polarität mittels eines auf der Zeichnung nicht gezeigten Umschalters betätigt werden. Dieser Impuls verschiebt den Kern in die andere Endstellung, wo er bleibt, obwohl der Endschalter die Versorgung abschaltet.

## Patentansprüche

1. Das Elektroventil, bestehend aus einem Körper mit longitudinaler Durchflussleitung und einer Magnetspule mit dem in seiner Achse ausgehöhlten Walzenkern, der einen sich in einer Hin-und Herbewegung bewegenden Kurzschließer bildet, charakterisiert sich dadurch, dass den Kern /4/ ein Dauermagnet in seiner ganzen Länge oder ihrem mindestens der Längenhälfte der Spule /3/ gleichem Teil bildet, und die Länge des Kerns /4/ ist so, dass er in der Offenstellung des Ventils den ganzen Durchmesser der Durchflussleitung /2/ öffnet, in der Verschlussstellung dagegen ist der Abstand seines Endes von der Wickelungsgrenze der Spule /3/ kleiner als die Hälfte der Spulenlänge, wobei auf dem Körper /1/ bei beiden Enden des Kanals /7/ Elektroventil elektronische Endschalter /8/ hat.
